# FASCICULE DE BREVET EUROPEEN

(11) **EP 3 826 918 B1**
(45) Date de publication et mention de la délivrance du brevet: **07.09.2022**
(21) Numéro de dépôt: 19740588.9
(22) Date de dépôt: 23.07.2019
(51) Int. Cl.: B64C 1/14, E05F 1/10

(54) **DISPOSITIF D'OUVERTURE D'URGENCE D'UNE PORTE D'AÉRONEF, À ORGANE DE RETENUE À LEVIER**
VORRICHTUNG MIT EINEM HEBELARTIGEN RÜCKHALTEELEMENT ZUM ÖFFNEN EINER FLUGZEUGTÜR IN NOTFÄLLEN
DEVICE FOR OPENING AN AIRCRAFT DOOR IN EMERGENCIES, SAID DEVICE HAVING A LEVER-TYPE RETENTION MEMBER

(30) Priorité: 24.07.2018 FR 1856874
(43) Date de publication de la demande: 02.06.2021
(73) Titulaire: Latecoere, 31500 Toulouse, Occitanie (FR)
(72) Inventeur: MOLINARI, Didier, 31130 Balma Occitanie (FR)
(74) Mandataire: Junca, Eric
(86) Numéro de dépôt international: PCT/EP2019/069751
(87) Numéro de publication internationale: WO 2020/020861

(56) Documents cités:
- EP-A1- 2 644 495
- DE-U1-202016 003 562
- FR-A1- 2 975 967
- US-A- 5 289 615
- US-A1- 2002 184 733
- US-A1- 2016 002 965

## Description

### DOMAINE TECHNIQUE

L'invention concerne le domaine de l'aéronautique et a trait à un dispositif d'ouverture d'urgence d'une porte d'aéronef dotée d'un mécanisme d'ouverture.

Les portes d'aéronefs qui comportent un mécanisme d'ouverture peuvent être ouvertes pour permettre la sortie et l'entrée de passagers ou pour permettre l'évacuation en cas d'urgence. En cas d'évacuation d'urgence des passagers, les portes d'aéronefs, qu'elles soient des portes de passager ou des portes d'évacuation d'urgence, comportent usuellement un dispositif d'ouverture d'urgence qui, s'il est activé, provoque une ouverture rapide et sans effort des portes, sans nécessiter d'intervention humaine.

De tels dispositifs d'ouverture d'urgence comprennent classiquement des moyens d'actionnement du mécanisme d'ouverture de la porte, commutables entre un état passif et un état actif d'activation du mécanisme d'ouverture (ce qui provoque l'ouverture de la porte), et des moyens d'activation des moyens d'actionnement (qui permettent à un utilisateur de déclencher l'ouverture d'urgence).

### ÉTAT DE LA TECHNIQUE

A l'heure actuelle, tel que notamment décrit dans les demandes de brevet FR2830564 et EP0741073, les moyens d'actionnement consistent classiquement en un actionneur de type pneumatique alimenté au moyen d'une réserve annexe de fluide moteur. De tels moyens d'actionnement présentent toutefois plusieurs inconvénients. En effet, et en premier lieu, ils s'avèrent d'un poids et d'un encombrement relativement importants, en raison notamment de la présence de la réserve annexe de fluide moteur. De plus, ils imposent d'effectuer un contrôle périodique de la pression du fluide moteur, et de remplacer périodiquement la réserve annexe même en l'absence d'utilisation de cette dernière. Enfin, après activation du dispositif d'ouverture d'urgence ces moyens d'actionnement imposent, en vue d'être à nouveau opérationnels, un remplacement de la réserve annexe de fluide moteur.

Une autre solution actuelle décrite notamment dans la demande de brevet FR2864021 permet de diminuer l'encombrement et le poids des moyens d'actionnement. En effet, selon cette solution, les moyens d'actionnement consistent en un vérin pyrotechnique, c'est-à-dire un vérin autonome n'exigeant pas de source d'alimentation en fluide moteur. Par contre, de tels vérins pyrotechniques nécessitent d'être périodiquement inspectés et remplacés même en l'absence d'utilisation. Ces vérins pyrotechniques doivent, en outre, être également remplacés après activation du dispositif d'ouverture d'urgence.

La demande de brevet FR2975967 décrit un dispositif d'ouverture d'urgence d'aéronef qui pallie les inconvénients décrits ci-dessus. Ce dispositif d'ouverture d'urgence consiste en des moyens d'actionnement de conception mécanique permettant de se passer d'éléments pneumatiques ou pyrotechniques. Le poids et l'encombrement du dispositif d'ouverture d'urgence sont ainsi réduits, la fiabilité est augmentée, et ce dispositif requiert peu ou pas de maintenance. Cependant, le dispositif d'ouverture d'urgence décrit nécessite des moyens d'activation comportant un électroaimant. Ce dispositif d'ouverture d'urgence n'est donc pas entièrement mécanique puisqu'il a recours à un élément électromécanique qui nécessite une source d'énergie électrique externe, ainsi qu'un dispositif de commande adapté à relier l'électroaimant à cette source d'énergie électrique externe. Ce dispositif d'ouverture de porte nécessite donc, en plus de cette source d'énergie électrique externe, des câblages d'alimentation et de commande qui peuvent être une source supplémentaire de complexité et de dysfonctionnement. La raison pour laquelle un électroaimant est nécessaire dans ce dispositif d'ouverture d'urgence est que l'organe de retenue exerce une force importante sur un organe de manœuvre, de sorte que le passage en position ouverte de l'organe de retenue en vue de libérer l'organe de manœuvre pour l'ouverture d'urgence nécessite de vaincre cette force. Le dispositif d'ouverture d'urgence comporte un tronçon de réarmement et des mâchoires qui permettent d'obtenir un effort de retenue très important permettant d'utiliser des moyens élastiques présentant un tarage conséquent. Dans cette configuration, la réalisation d'un organe de retenue purement mécanique, et activable par un individu, nécessiterait un bras de levier trop important et incompatible avec les objectifs de compacité du dispositif d'ouverture d'urgence.

### EXPOSÉ DE L'INVENTION

Le but de l'invention est d'améliorer les dispositifs d'ouverture d'urgence de l'art antérieur en fournissant un tel dispositif dont le fonctionnement et la commande sont entièrement mécaniques et dont le passage de l'organe de retenue de sa position fermée où il verrouille l'organe de manœuvre à sa position ouverte où il libère cet organe de manœuvre en vue de l'ouverture d'urgence ne nécessite que peu d'effort de la part de l'utilisateur qui déclenche le dispositif d'ouverture d'urgence.

À cet effet, l'invention vise un dispositif d'ouverture d'urgence d'une porte d'aéronef dotée d'un mécanisme d'ouverture, comprenant :
- des moyens d'actionnement du mécanisme d'ouverture, commutables entre un état passif et un état actif d'activation du mécanisme d'ouverture, et comprenant : un organe de manœuvre tubulaire doté d'une première extrémité de liaison avec la porte, et d'une deuxième extrémité de verrouillage ; des moyens élastiques de compression disposés entre un élément de butée fixe et l'organe de manœuvre ; un organe de retenue de la deuxième extrémité de verrouillage, mobile entre une position fermée de verrouillage de la deuxième extrémité de verrouillage, dans une position de l'organe de manœuvre correspondant à l'état passif des moyens d'actionnement dans laquelle les moyens élastiques sont maintenus comprimés, et une position ouverte de libération de la deuxième extrémité de verrouillage autorisant le déplacement de l'organe de manœuvre selon un axe de déplacement vers une position correspondant à l'état actif des moyens d'actionnement, sous l'effet de l'effort résultant de l'expansion des moyens élastiques ;
- des moyens d'activation des moyens d'actionnement adaptés pour entrainer l'ouverture de l'organe de retenue ;
Dans ce dispositif :
- l'organe de manœuvre tubulaire comporte une surface d'arrêt sur sa deuxième extrémité de verrouillage ;
- l'organe de retenue comporte : un levier muni d'une dent de verrouillage et monté pivotant sur l'élément de butée fixe, le levier étant mobile entre une position fermée où la dent de verrouillage coopère avec la surface d'arrêt pour le verrouillage de la deuxième extrémité de verrouillage, et une position ouverte où la dent de verrouillage est à l'écart de la surface d'arrêt ; et un verrou rotatif présentant une surface de maintien définie par une portion de cylindre centré sur l'axe de déplacement, le verrou rotatif étant rotatif autour de l'axe de déplacement entre une position fermée, où la surface de maintien retient le levier dans sa position fermée, et une position ouverte, où la surface de maintien est à l'écart du levier.

Dans la présente description et les revendications, l'expression « liaison avec la porte » s'entend relativement à la porte d'aéronef au sens large. La porte d'aéronef au sens large inclut l'ouvrant de la porte, le mécanisme d'ouverture de porte, ou encore la structure encadrant la porte et reliée au fuselage (correspondant au chambranle de la porte). Ainsi, la première extrémité de l'organe d'actionnement est reliée à un élément de la porte (ouvrant, mécanisme d'ouverture, ou structure encadrante) et l'élément de butée fixe est reliée à un autre élément de la porte (ouvrant, mécanisme d'ouverture, ou structure encadrante) tels que l'expansion des moyens élastiques provoque l'actionnement du mécanisme d'ouverture de la porte, et l'ouverture effective de la porte. Par exemple, la première extrémité de l'organe d'actionnement peut être fixée sur le mécanisme d'ouverture de la porte, et l'élément de butée fixe peut être fixé sur l'ouvrant de la porte. Autre exemple, la première extrémité de l'organe d'actionnement peut être fixée sur l'ouvrant de la porte, et l'élément de butée fixe peut être fixé sur la structure encadrante de la porte.

Un tel dispositif d'ouverture d'urgence présente tous les avantages d'un dispositif mécanique tel que décrit dans le document FR2975967. Ces moyens d'actionnement présentent un poids et un encombrement réduit. La conception mécanique des moyens d'actionnement ne requiert pas de maintenance particulière en l'absence d'utilisation du dispositif d'ouverture. L'utilisation du dispositif d'ouverture n'implique pas qu'un organe de déclenchement doive être remplacé, comme avec les dispositifs pneumatiques ou pyrotechniques. Aucun fluide moteur n'est nécessaire pour activer les moyens d'actionnement.

Le dispositif selon l'invention est, de plus, entièrement mécanique et ne requiert aucun branchement à une source d'énergie externe ni à une commande déportée. Un tel dispositif forme un produit fini de type vérin mécanique entièrement autonome, ce qui est un gage de fiabilité et de sureté de fonctionnement appréciables dans le domaine de l'aéronautique et plus particulièrement des dispositifs d'ouverture de secours.

Bien que le dispositif selon l'invention soit entièrement mécanique et autonome, il peut comporter des moyens élastiques à tarage important, c'est-à-dire destiné à exercer une force d'ouverture importante sur le mécanisme d'ouverture de la porte, ce qui est nécessaire dans cette application d'ouverture d'urgence de porte. Malgré le tarage important des éléments élastiques, l'activation des moyens d'actionnement se fait sans effort grâce à l'organe de retenue à levier.

Le dispositif d'ouverture d'urgence selon l'invention peut comporter les caractéristiques additionnelles suivantes, seules ou en combinaison :
- la surface d'arrêt est définie par une gorge pratiquée dans la deuxième extrémité de verrouillage de l'organe de manœuvre ;
- les moyens d'activation des moyens d'actionnement comportent un levier de commande adapté à provoquer la rotation du verrou rotatif ;
- le verrou rotatif est monté tournant par rapport à l'élément de butée fixe ;
- le dispositif comporte un cylindre d'axe fixé sur l'élément de butée fixe, l'organe de manœuvre étant monté coulissant dans le cylindre d'axe suivant l'axe de déplacement ;
- l'élément de butée fixe comporte : un corps muni de moyens de fixation et sur lequel est monté pivotant le levier ; une collerette rattachée au cylindre d'axe, les moyens élastiques étant appuyés sur la collerette ;
- l'organe de manœuvre est monté suivant un ajustement glissant dans le cylindre d'axe ;
- la surface d'arrêt est sensiblement orthogonale à l'axe de déplacement ;
- le verrou rotatif comporte une languette s'étendant axialement, la surface de maintien étant définie par la languette ;
- le verrou rotatif comporte deux languettes s'étendant axialement en vis-à-vis l'une de l'autre, une surface de maintien étant définie par chaque languette, et l'organe de retenue comporte deux leviers munis chacun d'une dent de verrouillage et montés chacun pivotant sur l'élément de butée fixe, chaque levier étant mobile entre une position fermée où la dent de verrouillage coopère avec la surface d'arrêt pour le verrouillage de la deuxième extrémité de verrouillage, et une position ouverte où la dent de verrouillage est à l'écart de la surface d'arrêt, le verrou rotatif étant rotatif autour de l'axe de déplacement entre une position fermée, où chaque surface de maintien retient l'un des leviers dans sa position fermée, et une position ouverte, où chaque surface de maintien est à l'écart du levier correspondant ;
- la languette comporte une butée d'arrêt pour le levier ;
- le verrou rotatif entoure le cylindre d'axe et est monté tournant sur le cylindre d'axe ;
- le verrou rotatif est axialement fixé sur le cylindre d'axe en étant maintenu entre deux butées axiales ;
- le levier comporte une bague de roulage adaptée à rouler sur la surface de maintien ;
- l'élément de butée fixe comporte une fenêtre permettant le passage du levier lorsque le levier est en position ouverte ;
- la fenêtre définit une butée pour le levier ;
- l'organe de retenue comporte un dispositif à genouillère commandant le levier entre ses positions ouverte et fermée, et le verrou rotatif comporte une came montée rotative sur l'élément de butée fixe et coopérant avec le dispositif à genouillère de sorte que la rotation du verrou rotatif ouvre le dispositif à genouillère ;
- les moyens élastiques de compression comportent un ressort tubulaire entourant, au moins partiellement, l'organe de manœuvre, et dont les extrémités sont disposées entre l'élément de butée fixe et l'organe de manœuvre.

### PRESENTATION DES FIGURES

D'autres caractéristiques et avantages de l'invention apparaitront à la lecture de la description non limitative qui suit, en référence aux dessins annexés dans lesquels :
- la figure 1 est une vue en perspective d'un dispositif d'ouverture d'urgence selon l'invention dans son état passif ;
- la figure 2 représente le dispositif de la figure 1 dans son état actif ;
- la figure 3 est une coupe longitudinale du dispositif dans sa position de la figure 1 ;
- la figure 4 est une coupe longitudinale du dispositif dans sa position de la figure 2 ;
- la figure 5 est similaire à la figure 3, l'organe de manœuvre étant en position d'ouverture de service ;
- la figure 6 est une vue agrandie du rectangle VI de la figure 5 ;
- la figure 7 est une vue de face de l'organe de retenue du dispositif dans sa position de la figure 1 ;
- la figure 8 est une vue de face de l'organe de retenue du dispositif dans sa position de la figure 2 ;
- les figures 9 à 11 illustrent un deuxième mode de réalisation du dispositif d'ouverture d'urgence.

### DESCRIPTION DÉTAILLÉE

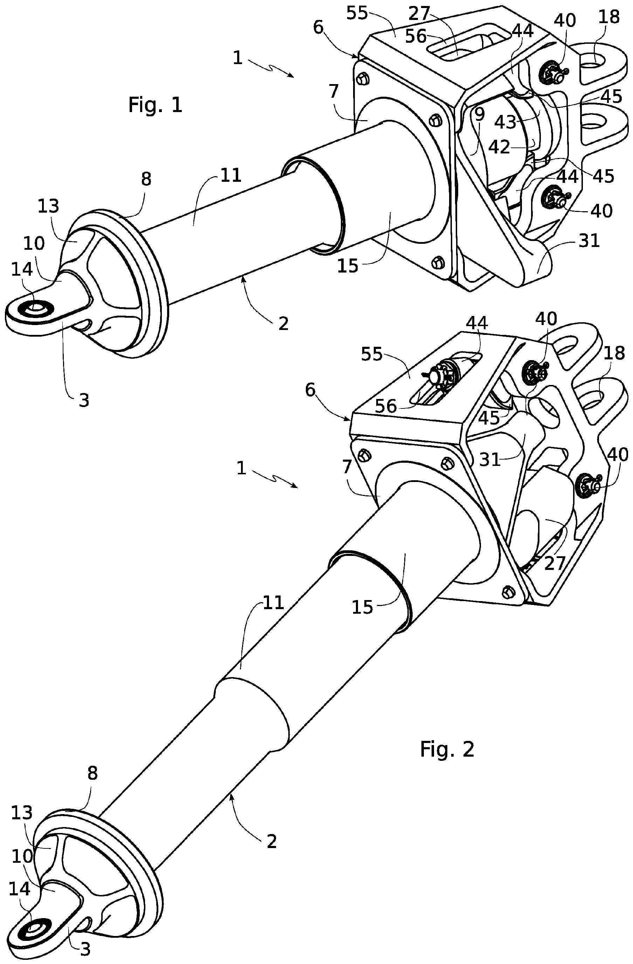

Le dispositif 1 d'ouverture d'urgence de porte d'aéronef selon l'invention est représenté en perspective aux figures 1 et 2, respectivement dans son état passif et dans son état actif. Ce dispositif 1 est destiné à être relié par ses extrémités à des éléments de la porte d'aéronef de sorte que l'expansion de ce dispositif 1 (dans l'état actif, figure 2) provoque l'ouverture d'urgence de la porte.

Ce dispositif 1 d'ouverture d'urgence peut être positionné sur tout type de porte ou d'ouvrant d'un aéronef, disposant d'un mécanisme d'ouverture. Les mécanismes d'ouverture de porte d'aéronef sont bien connus et ne seront pas décrits plus en détail ici. Le dispositif 1 peut par exemple être monté pour coopérer avec un mécanisme d'ouverture de porte à transmission par chaine tel que décrit dans le document FR2975967, ou encore dans d'autres mécanismes d'ouverture connus tels que des mécanismes à biellettes formant un parallélogramme déformable.

Quel que soit le type de mécanisme d'ouverture de porte d'aéronef, le dispositif 1 d'ouverture d'urgence permet, lorsqu'il est activé par un utilisateur, l'ouverture rapide et automatique de la porte de l'aéronef en vue de l'évacuation de ce dernier.

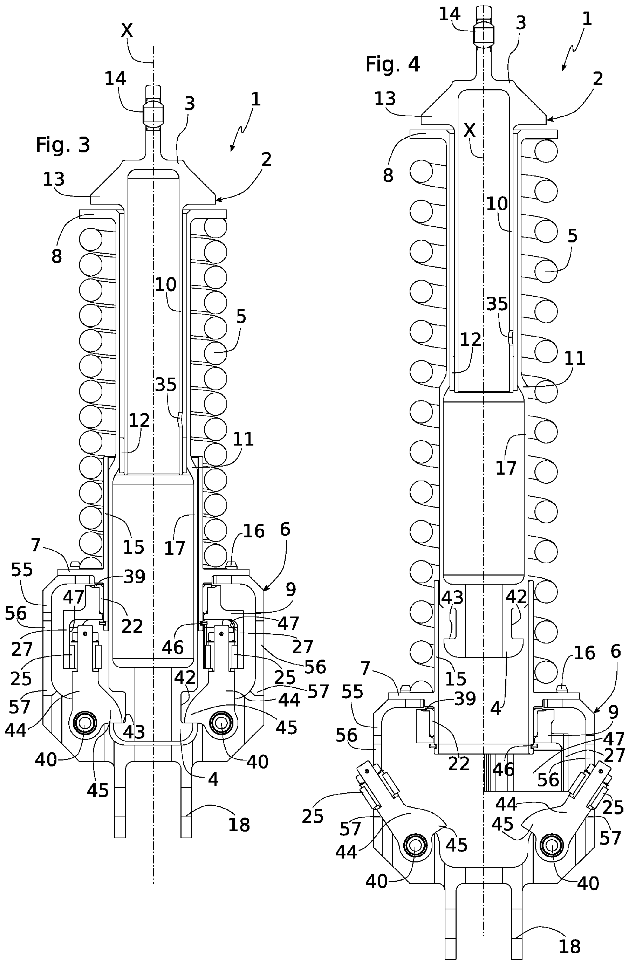

En référence aux figures 3 et 4, le dispositif 1 comporte des moyens d'actionnement du mécanisme d'ouverture de la porte qui sont commutables entre l'état passif de la figure 1 et l'état actif de la figure 2. Dans l'état passif, le dispositif 1 n'exerce pas d'effort sur la porte ou le mécanisme d'ouverture de la porte, la fonction d'ouverture d'urgence n'est pas activée, ce qui correspond à l'état normal de fonctionnement du mécanisme d'ouverture de la porte. Dans l'état actif, en cas d'urgence et lorsque l'évacuation de l'aéronef est nécessaire, le mécanisme d'ouverture de la porte est activé grâce à une force exercée par le dispositif 1 jusqu'à l'ouverture complète de la porte (dispositif 1 dans la position des figures 2 et 4).

En référence aux figures 3 et 4, ces moyens d'actionnement du mécanisme d'ouverture de la porte comprennent un organe de manœuvre tubulaire 2 qui est mobile selon un axe de déplacement X qui est son axe longitudinal. Cet organe de manœuvre 2 comporte une première extrémité 3 de liaison avec un élément de la porte non représenté (par exemple le mécanisme d'ouverture), et comporte une deuxième extrémité 4 dite de verrouillage. La première extrémité 3 comporte une rotule 14 permettant l'accouplement du dispositif 1 avec un élément de la porte.

Dans toute la description et les revendications, les références « axial » et « radial » se référent a l'axe X.

Les moyens d'actionnement comportent également des moyens élastiques de compression qui sont constitués ici d'un ressort 5 cylindrique qui est disposé entre un élément de butée fixe 6 et l'organe de manœuvre 2. Sur les figures 1 et 2, le ressort 5 n'a pas été représenté pour simplifier la figure. L'élément de butée fixe 6 comporte une collerette 7 permettant l'appui d'une extrémité du ressort 5 et l'organe de manœuvre 2 comporte également une collerette 8 permettant l'appui de l'autre extrémité du ressort 5. Dans l'état passif des moyens d'actionnement, le ressort 5 est comprimé et les deux collerettes 7, 8 sont rapprochées au maximum, tandis que dans son état actif, les deux collerettes 7, 8 sont éloignées l'une de l'autre sous l'effet de la force du ressort 5. L'élément 6 de butée fixe comporte deux trous de fixation 18 pour sa fixation sur un élément de la porte de l'aéronef de telle sorte que l'expansion du ressort 5 provoquera l'ouverture de cette porte.

Les moyens d'actionnement du dispositif 1 comportent de plus un organe de retenue de la deuxième extrémité de verrouillage 4 de l'organe de manœuvre 2, cet organe de retenue étant ici constitué d'un verrou rotatif 9 ainsi que deux leviers de verrouillage 44. Le verrou rotatif 9 est monté tournant autour de l'axe X et les leviers 44 sont montés pivotants sur l'élément de butée fixe 6, chacun autour d'un axe de pivot 40. L'organe de retenue est mobile entre une position fermée, dans laquelle le verrou rotatif 9 maintient les leviers 44 dans une position de verrouillage (figure 3), et une position ouverte, dans laquelle le verrou rotatif 9 relâche les leviers 44 (figure 4).

L'élément de butée fixe 6 comporte deux fenêtres 56 permettant le passage des leviers 44 lorsqu'ils sont en position ouverte (figure 4). Ces fenêtres 56 définissent par ailleurs chacune une butée 57 contre laquelle le levier 44 correspondant vient en appui lorsqu'il est dans cette position ouverte.

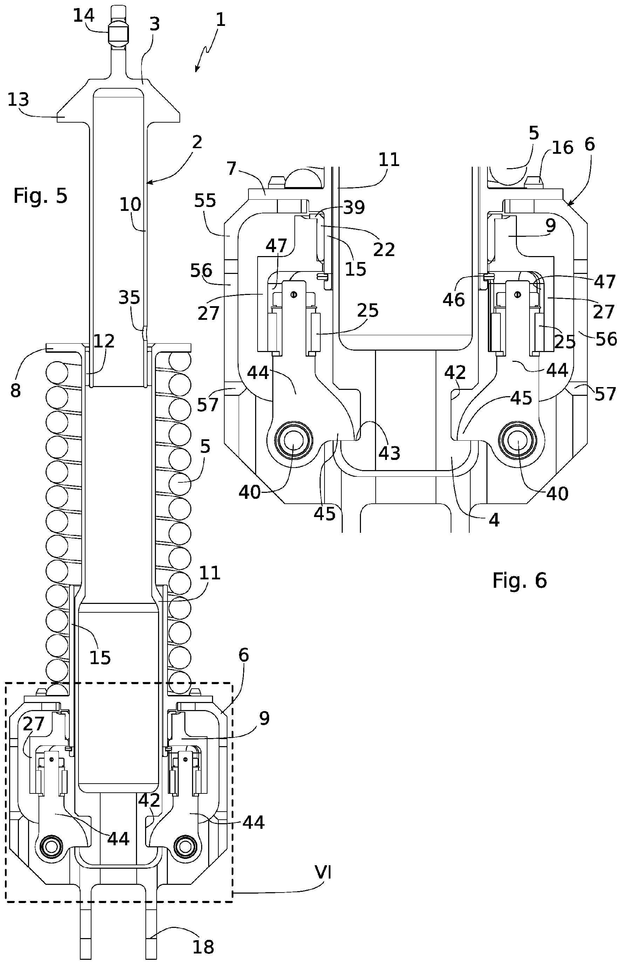

L'organe de manœuvre 2 est un élément télescopique constitué d'un tube 10 de première extrémité et d'un tube 11 de deuxième extrémité pouvant coulisser l'un dans l'autre. Dans le présent exemple, le tube 10 de première extrémité présente un diamètre externe inférieur au diamètre interne du tube 11 de deuxième extrémité de sorte que le tube 10 de première extrémité puisse être inséré à l'intérieur du tube 11 de deuxième extrémité sur une portion d'emmanchement. Un palier de glissement 12, réalisé dans un matériau à faible coefficient de frottement, est de plus monté entre le tube 10 de première extrémité et le tube 11 de deuxième extrémité de sorte que le coulissement du tube 10 de première extrémité par rapport au tube 11 de deuxième extrémité entraine le coulissement du palier de glissement 12 contre les parois internes du tube 11 de deuxième extrémité. Un trou 35 pratiqué dans le tube 10 de première extrémité permet l'évacuation d'éventuels condensats se formant à l'intérieur du dispositif 1. Le caractère télescopique de l'organe de manœuvre 2 permet une fonction dite d'ouverture de service décrite plus loin. La figure 5 représente le dispositif 1 avec l'organe de manœuvre 2 en position d'ouverture de service.

Le tube 10 de première extrémité constitue ainsi la première extrémité 3 de l'organe de manœuvre 2. Le tube 10 de première extrémité est de plus muni d'une collerette 13 coopérant avec la collerette 8 qui est, quant à elle, réalisée sur le tube 11 de deuxième extrémité. Les deux collerettes 8, 13 coopèrent de sorte que, lorsque le ressort 5 repousse l'organe de manœuvre 2 (état actif des moyens d'actionnement, voir figure 4) le ressort 5 prend appui sur la collerette 8 qui, elle-même, prend appui sur la collerette 13 et qui repousse donc l'ensemble de l'organe de manœuvre 2 en l'éloignant de l'élément de butée fixe 6. Le tube 10 de première extrémité est alors emmanché au maximum dans le tube 11 de deuxième extrémité, les collerettes 8, 13 venant en butée l'une contre l'autre.

L'ensemble de l'organe de manœuvre 2 (qui est donc constitué du tube 10 de première extrémité et du tube 11 de deuxième extrémité) peut se déplacer longitudinalement, le long de l'axe X, entre les deux positions extrêmes des figures 3 et 4, lorsque l'ouverture d'urgence est déclenchée. Ce mouvement de l'organe de manœuvre 2 est réalisé par coulissement de l'organe de manœuvre 2 à l'intérieur d'un cylindre d'axe 15. Le cylindre d'axe 15 est un cylindre fixé sur l'élément de butée fixe 6 par des moyens de vissage 16. Dans le présent exemple, la collerette 7 d'appui du ressort 5 sur l'élément de butée fixe 6 est formée par une couronne saillante du cylindre d'axe 15. La collerette 7 peut coopérer avec une rondelle optionnelle placée entre le ressort 5 et la collerette 7. L'élément de butée fixe 6 comporte ainsi : un corps 55 muni des trous de fixation 18, et sur lequel est monté pivotant le levier 44 ; la collerette 7 rattachée au cylindre d'axe 15, le ressort 5 étant appuyé sur la collerette 7 ou sur la rondelle optionnelle.

Le cylindre d'axe 15 fournit une liaison pivot glissant pour le guidage longitudinal, le long de l'axe X, de l'organe de manœuvre 2 grâce à une portion de glissement 17 prévue sur le tube 11 de deuxième extrémité, le diamètre externe de la portion de glissement 17 étant ajusté au diamètre interne du cylindre d'axe 15.

L'organe de manœuvre 2 rempli sa fonction d'ouverture de service, en plus de l'ouverture d'urgence, grâce à son caractère télescopique en permettant l'ouverture et la fermeture de la porte d'aéronef dans des conditions normales d'utilisation, c'est à dire hors des périodes d'ouverture d'urgence, le dispositif d'ouverture d'urgence étant maintenu dans un état passif et le ressort 5 restant comprimé. Pour cette fonction, un coulissement le long de l'axe X est possible entre le tube 10 de première extrémité et le tube 11 de deuxième extrémité grâce au palier de glissement 12 décrit précédemment.

Lorsque le dispositif 1 est dans sa position de la figure 3, la porte d'aéronef est fermée. À partir de cette position, la porte peut s'ouvrir selon deux modes :

- un mode d'ouverture d'urgence dans lequel les moyens d'actionnement sont activés. L'expansion du ressort 5 va alors provoquer l'éloignement de l'élément de butée fixe 6 et du tube 11 de deuxième extrémité l'un de l'autre (grâce aux collerettes 7, 8). La collerette 8 va de plus entrainer elle-même la collerette 13, donc le tube de première extrémité 10, suivant l'axe X. L'ensemble de l'organe de manœuvre 2 rejoint donc la position des figures 2 et 4, la porte étant ouverte suite à l'action de la poussée du ressort 5 ;

- un mode d'ouverture de service, dans lequel le tube 10 de première extrémité coulisse librement dans le tube 11 de deuxième extrémité, sous l'effet de la porte qui est ouverte par une action extérieure, jusqu'à la position de la figure 5 correspondant à l'ouverture totale de la porte d'aéronef.

Pour permettre le verrouillage de l'organe de manœuvre 2 dans sa position des figures 1 et 3, la deuxième extrémité 4 de l'organe de manœuvre 2 est munie d'une gâche qui est ici constituée par une gorge 42 pratiquée dans le tube 11 de deuxième extrémité. La gorge 42 présente une surface d'arrêt 43 sensiblement orthogonale à l'axe X.

La figure 6 est une vue agrandie du cadre VI de la figure 5. Dans cette position verrouillée, le verrou rotatif 9 est en position fermée et retient donc les leviers 44 dans une position verrouillée. Dans cette position verrouillée, les leviers 44 coopèrent avec la gorge 42 pour la retenue de la deuxième extrémité 4 de l'organe de manœuvre 2. Les leviers 44 comportent chacun une dent de verrouillage 45 engagée contre la surface d'arrêt 43 de la gorge 42 de sorte que, tant que les leviers 44 sont maintenus dans cette position verrouillée par le verrou rotatif 9, l'organe de manœuvre 2 est retenu par les leviers 44.

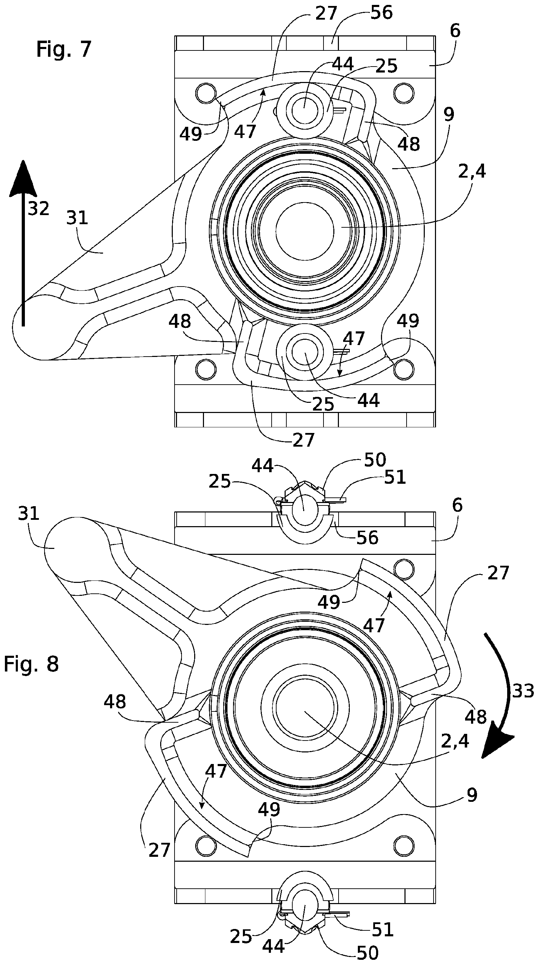

En référence aux figures 6 et 7, la coopération du verrou rotatif 9 et des leviers 44 va être décrite. Le verrou rotatif 9 présente une forme générale annulaire lui permettant d'être monté tournant sur le cylindre d'axe 15, de sorte qu'une rotation du verrou rotatif 9 par rapport au cylindre d'axe 15 est permise suivant une rotation autour de l'axe X. Dans le présent exemple, le verrou rotatif 9 est monté sur une bague glissante 22 présentant un faible coefficient de frottement. Le verrou rotatif 9 est solidaire d'un moyen d'activation constitué par un levier de commande 31 permettant de commander la rotation du verrou 9.

Le verrou rotatif 9 est immobilisé axialement sur le cylindre d'axe 15 par deux butées axiales glissantes constituées par une collerette d'arrêt axial 39 de la bague glissante 22 et par un anneau élastique 46 monté sur le cylindre d'axe 15. Le verrou rotatif 9 est ainsi en liaison pivot non glissant sur le cylindre d'axe 15. La bague glissante 22 permet une rotation avec peu d'effort de frottement du verrou rotatif 9 par rapport au cylindre d'axe 15.

Le verrou rotatif 9 comporte deux languettes 27 s'étendant axialement en direction des leviers 44. Chaque languette 27 forme une surface de maintien 47 qui est une portion d'un cylindre qui est centré sur l'axe X. En plus de la surface de maintien 47, chaque languette 27 comporte une butée d'arrêt 48 en position verrouillée. Sur la surface de maintien 47, à l'opposé de la butée 48, chaque languette 27 comporte un rebord libre 49 permettant la libération du levier 44 correspondant, comme exposé ci-après.

Les leviers 44 comportent de plus chacun une bague de roulage 25, montée rotative sur le levier 44 correspondant. Chaque bague de roulage 25 est maintenue sur le levier 44 correspondant par un arrêt en bout de levier, constitué dans cet exemple par un écrou 50 sécurisé par une goupille 51. Les bagues de roulage 25 sont réalisées de préférence à partir d'un matériau à faible coefficient de frottement pour minimiser les efforts lors de la rotation de la bague de roulage 25 par rapport au levier 44 correspondant.

Lorsque l'organe de retenue est en position fermée, le verrou rotatif 9 est en position verrouillée (voir figures 6 et 7) et les leviers 44 sont maintenus dans une position verrouillée par la surface de maintien 47 de la languette 27 correspondante. Dans la position verrouillée des leviers 44, les dents de verrouillage 45 retiennent l'organe de manœuvre 2 par sa deuxième extrémité 4, grâce à la surface d'arrêt 43 de la gorge 42.

Lorsqu'il est question de déclencher le dispositif 1 d'ouverture de secours, en cas d'urgence et en vue d'évacuer l'aéronef, un utilisateur actionne le levier de commande 31 en exerçant une force selon la flèche 32 de la figure 7, ce qui provoque une rotation du verrou rotatif 9 selon la flèche 33. Les bagues de roulage 25 des leviers 44 vont alors chacune rouler sur la surface de maintien 47, avec très peu d'efforts, en direction des rebords libres 49. Lorsque les bagues de roulage 25 franchissent les rebords libres 49, les leviers 44 ne sont plus retenus par le verrou rotatif 9 (voir figure 8). Lorsque les leviers 44 ne sont plus retenus par le verrou rotatif 9, le ressort 5 (qui sollicite constamment la surface d'arrêt 43 de la gorge 42 contre les dents de verrouillage 45) provoque la rotation des leviers 44 autour de leur axe 40 de sorte que les dents de verrouillage 45 s'écartent de la gorge 42 et la deuxième extrémité 4 de l'organe de manœuvre 2 n'est alors plus retenue. Le ressort 5 provoque alors le déplacement de l'organe de manœuvre 2 suivant l'axe X, jusqu'à la position de la figure 4, et donc l'ouverture d'urgence de la porte.

Optionnellement, le levier de commande 31 peut également être sécurisé contre les déclenchements intempestifs par une goupille telle qu'une broche à bille.

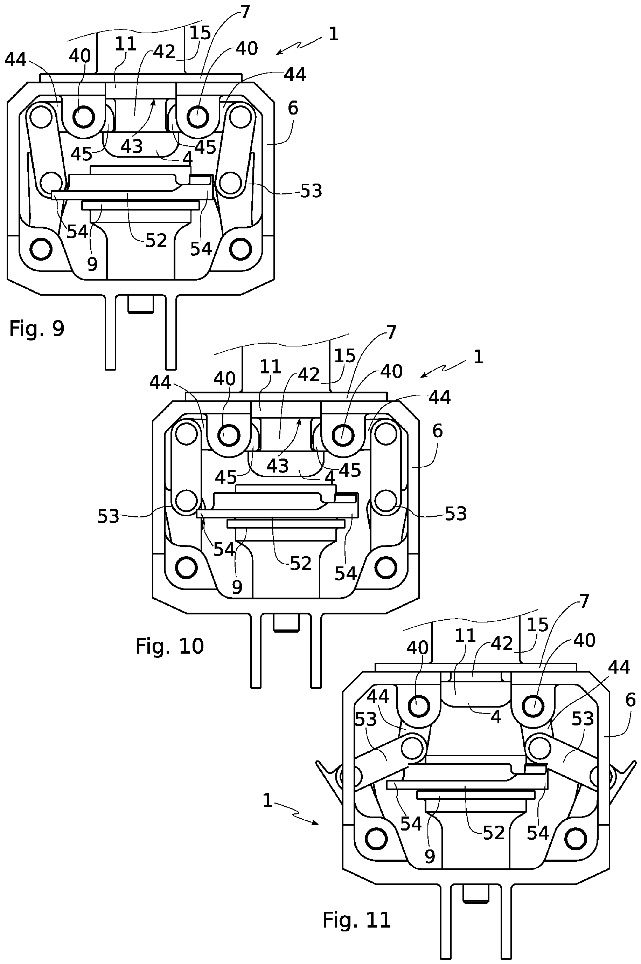

Les figures 9 à 11 illustrent par ailleurs un deuxième mode de réalisation du dispositif 1 du premier mode de réalisation relatif aux figures 1 à 8. Dans ce deuxième mode de réalisation, le dispositif d'ouverture d'urgence fonctionne de la même manière que dans le premier mode de réalisation, et les pièces communes aux deux modes de réalisation seront numérotées de la même manière, si ce n'est l'organe de retenue spécifique qui est décrit ci-après. Les autres éléments du deuxième mode de réalisation, fonctionnant donc de la même manière que le premier mode de réalisation, ne seront pas décrits à nouveau. Les figures 9 à 11 sont des coupes similaires aux coupes des figures 3 et 4.

Selon ce deuxième mode de réalisation, l'organe de retenue comporte une came 52, deux leviers de verrouillage 44 et un dispositif à genouillère 53 pour chaque levier 44. La came 52 est montée rotative sur l'élément de butée fixe 6 et présente deux convexités 54 diamétralement opposées permettant d'actionner chacune l'un des dispositifs à genouillère 53. La came 52 est commandée en rotation par un levier de commande identique au levier de commande 31 du premier mode de réalisation.

Les dispositifs à genouillère 53 sont constitués classiquement de deux tiges articulées et sont mobiles entre une position fermée (figure 9) et une position ouverte (figure 11). Les dispositifs à genouillères 53 sont disposés chacun entre l'élément de butée fixe 6 et l'un des leviers 44 de sorte que : lorsque le dispositif à genouillère est en position fermée, le levier 44 correspondant soit maintenu de manière stable dans sa position de verrouillage (la dent de verrouillage 45 retenant la surface d'arrêt 43 de la gorge 42, voir figure 9) ; et lorsque le dispositif à genouillère est en position ouverte, la dent de verrouillage 45 du levier 44 correspondant est écartée de la surface d'arrêt, la deuxième extrémité 4 de l'organe de manœuvre 2 n'étant plus retenue (voir figure 9).

À partir de la position de la figure 9, en vue de déclencher l'ouverture d'urgence, la rotation de la came 52 est commandée de sorte que les convexités 54 repoussent chacune un dispositif à genouillère 53. La figure 10 représente les dispositifs à genouillère 53 passant leur point d'équilibre. Après le passage du point d'équilibre, toujours sous la poussée des convexités 54, les dispositifs à genouillère 53 basculent dans leur position ouverte (voir figure 11) et le dispositif d'ouverture d'urgence est ainsi déclenché.

Des variantes de réalisation peuvent être envisagées sans sortir du cadre de l'invention selon les revendications annexées. Par exemple, le nombre de languettes 27 et de leviers 44 peut varier, au moins un levier 44 étant nécessaire pour coopérer avec la gorge 42.

L'activation du dispositif 1 d'ouverture d'urgence peut se faire par d'autres moyens qu'un levier de commande 31, par exemple une crémaillère permettant de faire tourner le verrou rotatif 9.

## Revendications

1. Dispositif d'ouverture d'urgence d'une porte d'aéronef dotée d'un mécanisme d'ouverture, comprenant :
- des moyens d'actionnement (2, 5) adaptés à actionner le mécanisme d'ouverture, commutables entre un état passif et un état actif d'activation du mécanisme d'ouverture, et comprenant : un organe de manœuvre tubulaire (2) doté d'une première extrémité (3) adaptée à être reliée à la porte, et d'une deuxième extrémité de verrouillage (4) ; des moyens élastiques de compression (5) disposés entre un élément de butée fixe (6) et l'organe de manœuvre (2) ; un organe de retenue de la deuxième extrémité de verrouillage (4), mobile entre une position fermée de verrouillage de la deuxième extrémité de verrouillage (4), dans une position de l'organe de manœuvre (2) correspondant à l'état passif des moyens d'actionnement dans laquelle les moyens élastiques (5) sont maintenus comprimés, et une position ouverte de libération de la deuxième extrémité de verrouillage (4) autorisant le déplacement de l'organe de manœuvre (2) selon un axe de déplacement (X) vers une position correspondant à l'état actif des moyens d'actionnement, sous l'effet de l'effort résultant de l'expansion des moyens élastiques (5) ;
- des moyens d'activation (31) des moyens d'actionnement (2, 5) adaptés pour entrainer l'ouverture de l'organe de retenue ;
ce dispositif d'ouverture d'urgence étant **caractérisé en ce que** :
- l'organe de manœuvre tubulaire (2) comporte une surface d'arrêt (43) sur sa deuxième extrémité de verrouillage (4) ;
- l'organe de retenue comporte : un levier (44) muni d'une dent de verrouillage (45) et monté pivotant sur l'élément de butée fixe (6), le levier (44) étant mobile entre une position fermée où la dent de verrouillage (45) coopère avec la surface d'arrêt (43) pour le verrouillage de la deuxième extrémité de verrouillage (4), et une position ouverte où la dent de verrouillage (45) est à l'écart de la surface d'arrêt (43) ; et un verrou rotatif (9) présentant une surface de maintien (47) définie par une portion de cylindre centré sur l'axe de déplacement (X), le verrou rotatif (9) étant rotatif autour de l'axe de déplacement (X) entre une position fermée, où la surface de maintien (47) retient le levier (44) dans sa position fermée, et une position ouverte, où la surface de maintien (47) est à l'écart du levier (44).

2. Dispositif selon la revendication 1, **caractérisé en ce que** la surface d'arrêt (43) est définie par une gorge (42) pratiquée dans la deuxième extrémité de verrouillage (4) de l'organe de manœuvre (2).

3. Dispositif selon l'une quelconque des revendications précédentes, **caractérisé en ce que** les moyens d'activation des moyens d'actionnement (2, 5) comportent un levier de commande (31) adapté à provoquer la rotation du verrou rotatif (9).

4. Dispositif selon l'une quelconque des revendications précédentes, **caractérisé en ce que** le verrou rotatif (9) est monté tournant par rapport à l'élément de butée fixe (6).

5. Dispositif selon l'une quelconque des revendications précédentes, **caractérisé en ce qu'**il comporte un cylindre d'axe (15) fixé sur l'élément de butée fixe (6), l'organe de manœuvre (2) étant monté coulissant dans le cylindre d'axe (15) suivant l'axe de déplacement (X).

6. Dispositif selon la revendication 5, **caractérisé en ce que** l'élément de butée fixe (6) comporte :
- un corps (55) muni de moyens de fixation (18) et sur lequel est monté pivotant le levier (44) ;
- une collerette (7) rattachée au cylindre d'axe (15), les moyens élastiques (5) étant appuyés sur la collerette (7).

7. Dispositif selon l'une des revendications 5 et 6, **caractérisé en ce que** l'organe de manœuvre (2) est monté suivant un ajustement glissant dans le cylindre d'axe (15).

8. Dispositif selon l'une quelconque des revendications précédentes, **caractérisé en ce que** la surface d'arrêt (43) est sensiblement orthogonale à l'axe de déplacement (X).

9. Dispositif selon l'une quelconque des revendications précédentes, **caractérisé en ce que** le verrou rotatif (9) comporte une languette (27) s'étendant axialement, la surface de maintien (47) étant définie par la languette (27).

10. Dispositif selon la revendication 9, **caractérisé en ce que** le verrou rotatif (9) comporte deux languettes (27) s'étendant axialement en vis-à-vis l'une de l'autre, une surface de maintien (47) étant définie par chaque languette (27), et **en ce que** l'organe de retenue comporte deux leviers (44) munis chacun d'une dent de verrouillage (45) et montés chacun pivotant sur l'élément de butée fixe (6), chaque levier (44) étant mobile entre une position fermée où la dent de verrouillage (45) coopère avec la surface d'arrêt (43) pour le verrouillage de la deuxième extrémité de verrouillage (4), et une position ouverte où la dent de verrouillage (45) est à l'écart de la surface d'arrêt (43), le verrou rotatif (9) étant rotatif autour de l'axe de déplacement (X) entre une position fermée, où chaque surface de maintien (47) retient l'un des leviers (44) dans sa position fermée, et une position ouverte, où chaque surface de maintien (47) est à l'écart du levier (44) correspondant.

11. Dispositif selon l'une des revendications 9 et 10, **caractérisé en ce que** la languette (27) comporte une butée d'arrêt (48) pour le levier (44).

12. Dispositif selon l'une des revendications 9 à 11, **caractérisé en ce que** le verrou rotatif (9) entoure le cylindre d'axe (15) et est monté tournant sur le cylindre d'axe (15).

13. Dispositif selon la revendication 12, **caractérisé en ce que** le verrou rotatif (9) est axialement fixé sur le cylindre d'axe (15) en étant maintenu entre deux butées axiales (39, 46).

14. Dispositif selon l'une quelconque des revendications précédentes, **caractérisé en ce que** le levier (44) comporte une bague de roulage (25) adaptée à rouler sur la surface de maintien (47).

15. Dispositif selon l'une quelconque des revendications précédentes, **caractérisé en ce que** l'élément de butée fixe (6) comporte une fenêtre (56) permettant le passage du levier (44) lorsque le levier (44) est en position ouverte.

16. Dispositif selon la revendication 15, **caractérisé en ce que** la fenêtre (56) définit une butée (57) pour le levier (44).

17. Dispositif selon l'une quelconque des revendications 1 à 8, **caractérisé en ce que** l'organe de retenue comporte un dispositif à genouillère (53) commandant le levier (44) entre ses positions ouverte et fermée, et **en ce que** le verrou rotatif (9) comporte une came montée rotative sur l'élément de butée fixe et coopérant avec le dispositif à genouillère de sorte que la rotation du verrou rotatif (9) ouvre le dispositif à genouillère (53).

18. Dispositif selon l'une quelconque des revendications précédentes, **caractérisé en ce que** les moyens élastiques de compression comportent un ressort tubulaire (5) entourant, au moins partiellement, l'organe de manœuvre (2), et dont les extrémités sont disposées entre l'élément de butée fixe (6) et l'organe de manœuvre (2).

## Patentansprüche

1. Notöffnungsvorrichtung für eine Flugzeugtür mit einem Öffnungsmechanismus, umfassend:
- Betätigungsmittel (2, 5), die dazu eingerichtet sind, den Öffnungsmechanismus zu betätigen, zwischen einem passiven Zustand und einem aktiven Zustand der Aktivierung des Öffnungsmechanismus umschaltbar sind und umfassen: ein rohrförmiges Betätigungselement (2) mit einem ersten Ende (3), das dazu eingerichtet ist, mit der Tür verbunden zu werden, und einem zweiten Verriegelungsende (4); elastische Kompressionsmittel (5), die zwischen einem feststehenden Anschlagelement (6) und dem Betätigungselement (2) angeordnet sind; ein Halteelement für das zweite Verriegelungsende (4), das beweglich ist zwischen einer geschlossenen Position der Verriegelung des zweiten Verriegelungsendes (4) in einer dem passiven Zustand der Betätigungsmittel entsprechenden Position des Betätigungselements (2), in welcher die elastischen Mittel (5) komprimiert gehalten werden, und einer offenen Position der Freigabe des zweiten Verriegelungsendes (4), welche die Verschiebung des Betätigungselements (2) unter der Einwirkung der aus der Ausdehnung der elastischen Mittel (5) resultierenden Kraft entlang einer Verschiebeachse (X) zu einer dem aktiven Zustand der Betätigungsmittel entsprechenden Position hin ermöglicht;
- Aktivierungsmittel (31) für die Betätigungsmittel (2, 5), die dazu eingerichtet sind, das Öffnen des Halteelements zu bewirken;
wobei diese Notöffnungsvorrichtung **dadurch gekennzeichnet ist, dass**:
- das rohrförmige Betätigungselement (2) eine Anschlagfläche (43) an seinem zweiten Verriegelungsende (4) aufweist;
- das Halteelement aufweist: einen Hebel (44), der mit einem Verriegelungszahn (45) ausgestattet ist und schwenkbar an dem feststehenden Anschlagelement (6) gelagert ist, wobei der Hebel (44) zwischen einer geschlossenen Position, in welcher der Verriegelungszahn (45) mit der Anschlagfläche (43) zur Verriegelung des zweiten Verriegelungsendes (4) zusammenwirkt, und einer offenen Position, in der sich der Verriegelungszahn (45) in einem Abstand von der Anschlagfläche (43) befindet, beweglich ist; und einen Drehriegel (9), der eine Haltefläche (47) aufweist, die durch einen Abschnitt eines auf der Verschiebeachse (X) zentrierten Zylinders definiert ist, wobei der Drehriegel (9) um die Verschiebeachse (X) zwischen einer geschlossenen Position, in der die Haltefläche (47) den Hebel (44) in seiner geschlossenen Position hält, und einer offenen Position, in der sich die Haltefläche (47) in einem Abstand von dem Hebel (44) befindet, drehbar ist.

2. Vorrichtung nach Anspruch 1, **dadurch gekennzeichnet, dass** die Anschlagfläche (43) durch eine Auskehlung (42) definiert ist, die in das zweite Verriegelungsende (4) des Betätigungselements (2) eingeformt ist.

3. Vorrichtung nach einem der vorhergehenden Ansprüche, **dadurch gekennzeichnet, dass** die Aktivierungsmittel für die Betätigungsmittel (2, 5) einen Steuerhebel (31) aufweisen, der dazu eingerichtet ist, die Drehung des Drehriegels (9) hervorzurufen.

4. Vorrichtung nach einem der vorhergehenden Ansprüche, **dadurch gekennzeichnet, dass** der Drehriegel (9) in Bezug auf das feststehende Anschlagelement (6) drehbar gelagert ist.

5. Vorrichtung nach einem der vorhergehenden Ansprüche, **dadurch gekennzeichnet, dass** sie einen Achsenzylinder (15) aufweist, der an dem feststehenden Anschlagelement (6) befestigt ist, wobei das Betätigungselement (2) in dem Achsenzylinder (15) entlang der Verschiebeachse (X) verschiebbar gelagert ist.

6. Vorrichtung nach Anspruch 5, **dadurch gekennzeichnet, dass** das feststehende Anschlagelement (6) aufweist:
- einen Körper (55), der mit Befestigungsmitteln (18) ausgestattet ist und auf dem der Hebel (44) schwenkbar gelagert ist;
- einen an den Achsenzylinder (15) angesetzten Flansch (7), wobei sich die elastischen Mittel (5) auf dem Flansch (7) abstützen.

7. Vorrichtung nach einem der Ansprüche 5 und 6, **dadurch gekennzeichnet, dass** das Betätigungselement (2) im Achsenzylinder (15) im Gleitsitz gelagert ist.

8. Vorrichtung nach einem der vorhergehenden Ansprüche, **dadurch gekennzeichnet, dass** die Anschlagfläche (43) im Wesentlichen orthogonal zur Verschiebeachse (X) ist.

9. Vorrichtung nach einem der vorhergehenden Ansprüche, **dadurch gekennzeichnet, dass** der Drehriegel (9) eine sich axial erstreckende Zunge (27) aufweist, wobei die Haltefläche (47) durch die Zunge (27) definiert ist.

10. Vorrichtung nach Anspruch 9, **dadurch gekennzeichnet, dass** der Drehriegel (9) zwei sich einander gegenüber axial erstreckende Zungen (27) aufweist, wobei durch jede Zunge (27) eine Haltefläche (47) definiert ist, und dadurch, dass das Halteelement zwei Hebel (44) aufweist, die jeweils mit einem Verriegelungszahn (45) ausgestattet sind und schwenkbar an dem feststehenden Anschlagelement (6) gelagert sind, wobei jeder Hebel (44) zwischen einer geschlossenen Position, in welcher der Verriegelungszahn (45) mit der Anschlagfläche (43) zur Verriegelung des zweiten Verriegelungsendes (4) zusammenwirkt, und einer offenen Position, in der sich der Verriegelungszahn (45) in einem Abstand von der Anschlagfläche (43) befindet, beweglich ist, wobei der Drehriegel (9) um die Verschiebeachse (X) zwischen einer geschlossenen Position, in der jede Haltefläche (47) einen der Hebel (44) in seiner geschlossenen Position hält, und einer offenen Position, in der sich jede Haltefläche (47) in einem Abstand von dem entsprechenden Hebel (44) befindet, drehbar ist.

11. Vorrichtung nach einem der Ansprüche 9 und 10, **dadurch gekennzeichnet, dass** die Zunge (27) einen Endanschlag (48) für den Hebel (44) aufweist.

12. Vorrichtung nach einem der Ansprüche 9 bis 11, **dadurch gekennzeichnet, dass** der Drehriegel (9) den Achsenzylinder (15) umgibt und auf dem Achsenzylinder (15) drehbar gelagert ist.

13. Vorrichtung nach Anspruch 12, **dadurch gekennzeichnet, dass** der Drehriegel (9) am Achsenzylinder (15) axial befestigt ist, wobei er zwischen zwei axialen Anschlägen (39, 46) gehalten wird.

14. Vorrichtung nach einem der vorhergehenden Ansprüche, **dadurch gekennzeichnet, dass** der Hebel (44) eine Rollhülse (25) aufweist, die dazu eingerichtet ist, auf der Haltefläche (47) zu rollen.

15. Vorrichtung nach einem der vorhergehenden Ansprüche, **dadurch gekennzeichnet, dass** das feststehende Anschlagelement (6) ein Fenster (56) aufweist, das den Durchgang des Hebels (44) ermöglicht, wenn sich der Hebel (44) in der offenen Position befindet.

16. Vorrichtung nach Anspruch 15, **dadurch gekennzeichnet, dass** das Fenster (56) einen Anschlag (57) für den Hebel (44) definiert.

17. Vorrichtung nach einem der Ansprüche 1 bis 8, **dadurch gekennzeichnet, dass** das Halteelement eine Kniehebelvorrichtung (53) aufweist, die den Hebel (44) zwischen seiner offenen und seiner geschlossenen Position steuert, und dadurch, dass der Drehriegel (9) einen Nocken aufweist, der auf dem feststehenden Anschlagelement drehbar gelagert ist und mit der Kniehebelvorrichtung so zusammenwirkt, dass die Drehung des Drehriegels (9) die Kniehebelvorrichtung (53) öffnet.

18. Vorrichtung nach einem der vorhergehenden Ansprüche, **dadurch gekennzeichnet, dass** die elastischen Kompressionsmittel eine rohrförmige Feder (5) aufweisen, die das Betätigungselement (2) wenigstens teilweise umgibt und deren Enden zwischen dem feststehenden Anschlagelement (6) und dem Betätigungselement (2) angeordnet sind.

## Claims

1. An emergency opening device for an aircraft door fitted with an opening mechanism, comprising:
- actuating means (2, 5) designed to actuate the opening mechanism, which can switch between a passive state and an active state of activating the opening mechanism, and which comprise: a tubular operating member (2) provided with a first end (3) designed to be connected to the door, and with a locking second end (4); elastic compression means (5) arranged between a fixed end-stop element (6) and the operating member (2); a retainer for restraining the locking second end (4), able to move between a closed position of locking of the locking second end (4), in a position of the operating member (2) corresponding to the passive state of the actuating means in which position the elastic means (5) are kept compressed, and an open position of releasing of the locking second end (4) allowing the operating member (2) to move along an axis of movement (X) toward a position corresponding to the active state of the actuating means, under the effect of the force resulting from the expansion of the elastic means (5);
- activating means (31) for activating the actuating means (2, 5) designed to bring about the opening of the retainer;
this emergency opening device being **characterized in that**:
- the tubular operating member (2) has a stop surface (43) on its locking second end (4);
- the retainer comprises: a lever (44) equipped with a locking tooth (45) and mounted with the ability to pivot on the fixed end-stop element (6), the lever (44) being able to move between a closed position in which the locking tooth (45) collaborates with the stop surface (43) to lock the locking second end (4), and an open position in which the locking tooth (45) is distant from the stop surface (43); and a rotary latch (9) having a retaining surface (47) defined by a portion of a cylinder centered on the axis of movement (X), the rotary latch (9) being able to rotate about the axis of movement (X) between a closed position in which the retaining surface (47) holds the lever (44) in its closed position, and an open position in which the retaining surface (47) is away from the lever (44).

2. The device as claimed in claim 1, **characterized in that** the stop surface (43) is defined by a groove (42) made in the locking second end (4) of the operating member (2).

3. The device as claimed in either one of the preceding claims, **characterized in that** the means for activating the actuating means (2, 5) comprise a control lever (31) designed to force the rotary latch (9) to rotate.

4. The device as claimed in any one of the preceding claims, **characterized in that** the rotary latch (9) is mounted with the ability to rotate with respect to the fixed end-stop element (6).

5. The device as claimed in any one of the preceding claims, **characterized in that** it comprises an axis cylinder (15) fixed to the fixed end-stop element (6), the operating member (2) being mounted with the ability to slide in the axis cylinder (15) along the axis of movement (X).

6. The device as claimed in claim 5, **characterized in that** the fixed end-stop element (6) comprises:
- a body (55) equipped with fixing means (18) and on which the lever (44) is pivot-mounted;
- a flange (7) attached to the axis cylinder (15), the elastic means (5) bearing against the flange (7).

7. The device as claimed in one of claims 5 and 6, **characterized in that** the operating member (2) is mounted as a sliding fit in the axis cylinder (15).

8. The device as claimed in any one of the preceding claims, **characterized in that** the stop surface (43) is substantially orthogonal to the axis of movement (X).

9. The device as claimed in any one of the preceding claims, **characterized in that** the rotary latch (9) comprises a blade (27) extending axially, the retaining surface (47) being defined by the blade (27).

10. The device as claimed in claim 9, **characterized in that** the rotary latch (9) comprises two blades (27) extending axially facing one another, a retaining surface (47) being defined by each blade (27), and **in that** the retainer comprises two levers (44) each equipped with a locking tooth (45) and each pivot-mounted on the fixed end-stop element (6), each lever (44) being able to move between a closed position in which the locking tooth (45) collaborates with the stop surface (43) to lock the locking second end (4), and an open position in which the locking tooth (45) is away from the stop surface (43), the rotary latch (9) being able to rotate about the axis of movement (X) between a closed position in which each retaining surface (47) holds one of the levers (44) in its closed position, and an open position in which each retaining surface (47) is away from the corresponding lever (44).

11. The device as claimed in one of claims 9 and 10, **characterized in that** the blade (27) comprises an end stop (48) for the lever (44).

12. The device as claimed in one of claims 9 to 11, **characterized in that** the rotary latch (9) surrounds the axis cylinder (15) and is mounted with the ability to rotate on the axis cylinder (15).

13. The device as claimed in claim 12, **characterized in that** the rotary latch (9) is axially fixed to the axis cylinder (15) being held between two axial end stops (39, 46).

14. The device as claimed in any one of the preceding claims, **characterized in that** the lever (44) comprises a rolling ring (25) designed to roll over the retaining surface (47).

15. The device as claimed in any one of the preceding claims, **characterized in that** the fixed end-stop element (6) comprises a window (56) that allows the lever (44) to pass when the lever (44) is in the open position.

16. The device as claimed in claim 15, **characterized in that** the window (56) comprises an end stop (57) for the lever (44).

17. The device as claimed in any one of claims 1 to 8, **characterized in that** the retainer comprises a toggle-joint device (53) operating the lever (44) between its open and closed positions, and **in that** the rotary latch (9) comprises a cam mounted with the ability to rotate on the fixed end-stop element and collaborating with the toggle-joint device so that rotation of the rotary latch (9) opens the toggle joint device (53).

18. The device as claimed in any one of the preceding claims, **characterized in that** the elastic compression means comprise a tubular spring (5) at least partially surrounding the operating member (2) and the ends of which are placed between the fixed end-stop element (6) and the operating member (2).
